# EUROPEAN PATENT SPECIFICATION

(11) **EP 4 016 552 B1**
(45) Date of publication and mention of the grant of the patent: **18.03.2026**
(21) Application number: 20306579.2
(22) Date of filing: 15.12.2020
(51) Int. Cl.: H01B 7/282, H01B 9/00

(54) **LEAD-FREE WATER BARRIER**
BLEIFREIE WASSERSPERRE
BARRIÈRE D'EAU SANS PLOMB

(43) Date of publication of application: 22.06.2022
(73) Proprietor: Nexans, 92400 Courbevoie (FR)
(72) Inventor: MAURI, Massimiliano, 1739 BORGENHAUGEN (NO); JORGENSEN, Simon, 1655 SELLEBAKK (NO); FURUHEIM, Kunt Magne, 1613 Fredrikstad (NO); GRORUD, Bettina, 1608 Fredrikstad (NO); JARVID, Markus, 44242 Kungälv (SE); JOHANSON, Audun, 0653 Oslo (NO)
(74) Representative: Acapo Onsagers AS

(56) References cited:
- EP-A1- 2 437 272
- JP-A- S62 168 303
- US-A- 3 950 605
- US-A- 4 454 379
- US-A1- 2011 048 765

## Description

The present invention relates to a lead-free water barrier suited for dynamical submarine high voltage power cables.

### Background

The current carrying parts of power cables may need to be kept dry. Intrusion of humidity or water may cause electrical breakdown of the power cable insulation system. The core section of power cables is therefore usually protected by a water barrier arranged radially around the cable core. Up to date, the dominating material in water barriers for power cables is lead since lead has proven to be a reliable and sturdy sheathing material, however with some well-known drawbacks.

One drawback is that lead is a high density materiel adding significant weight to the cable. The heavy weight induces extra costs in the entire value chain from production, under transport, storage, deployment, and when the cable is discarded after reaching its lifetime. Another drawback is that lead has a relatively low fatigue resistance making leaden water barriers less suited for dynamical power cables. Furthermore, lead is a rather poisonous material increasingly meeting environmental regulation restrictions. An environmentally friendly replacement of lead as water barrier in power cables is required.

Capacitive charges and resulting currents may cause problems in power cables if they are not conducted out of the cable. It is therefore advantageous to have water barriers being electrically conductive in radial direction.

### Prior art

EP 2 437 272 discloses a power cable comprising water barrier laminate. The main technical feature of a power cable according to the document is that the water barrier laminate comprising foil made of metal laminated between at least two layers of non-insulating polymer foils constituting a final laminate that is non insulating.

### Objective of the invention

The main objective of the invention is to provide a low weight and lead-free water barrier suitable for high-voltage power cables, which is capable of conducting capacitive currents radially out of the cable thus avoiding breakdown due to induced voltage gradients.

### Description of the invention

The present invention is based on the discovery that a lightweight and fatigue resilient water barrier having excellent water insulating effect and good capacity for leading capacitive currents radially may be obtained by wrapping a laminate structure comprising a metal foil and a thermoplastic semiconductive polymer around the cable core in one or more layers and then heat treat the laminate to thermally joined the layers of wrapped laminate structure.

Thus, in a first aspect, the invention relates to a power cable according to claim 1 comprising at least one cable core and a water barrier encapsulating a cable core,
wherein
the water barrier comprises at least one layer of a laminate structure being wrapped around the cable core with at least some overlap between opposite edges of the laminate structure,
   characterised in that
the laminate structure comprises:
   - a metal foil having a lower and an upper surface area, and
   - a first layer of a thermoplastic semiconducting polymer laid onto the lower surface area of the metal foil, and a second layer of a thermoplastic semiconducting polymer laid onto the upper surface of the metal foil,
      and
   - the laminate structure is thermally joined by a heat treatment,
wherein the water barrier further comprises a first adhesive laid onto the lower surface area of the metal foil and a second adhesive layer laid onto the upper surface area of the metal foil, and wherein the first and the second adhesive layers, after wrapping of the laminate structure, cover from 5 to 95 % of the surface area of the metal foil.

The term "encapsulating a cable core" as used herein means that the water barrier is laid onto and around the cable core to form a watertight layer around the cable core effectively preventing water and/or moisture from penetrating into the cable core. The term "wrapped around the cable core with at least some overlap between opposite edges" as used herein refers to the need for having the laminate structure covering 100 % of the surface of the cable core and to enable forming a watertight enclosure along the seam formed by the laminate structure being partly laid over itself

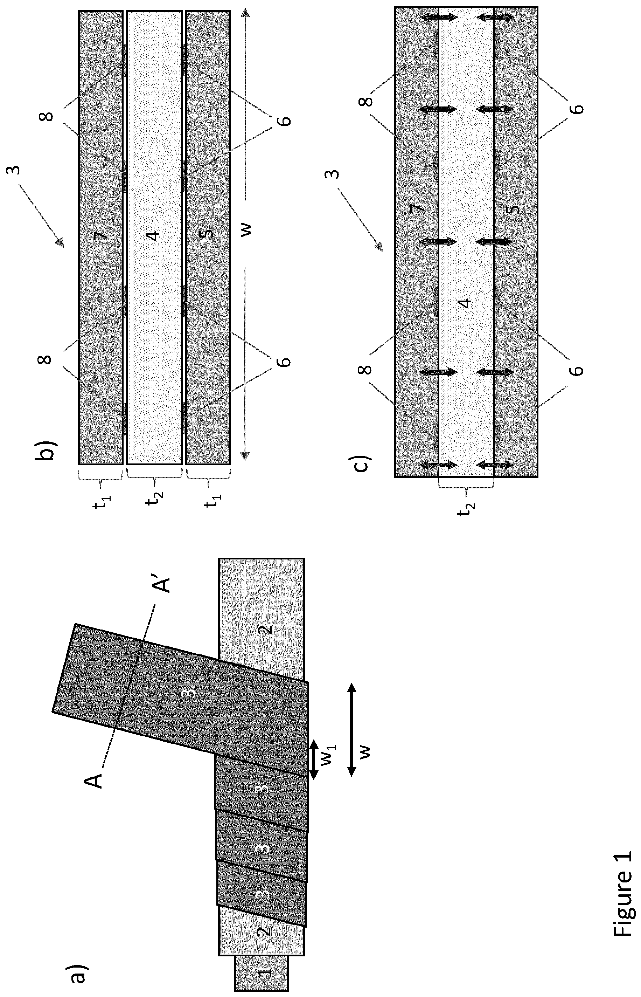

The term "metal foil" as used herein, refers to the metal layer in the middle of the laminate structure. The invention is not tied to use of any specific metal/metal alloy or thickness of the metal foil. Any metal/metal alloy at any thickness known to be suited for use in water barriers in power cables by the skilled person may be applied. In one example embodiment, the metal foil is either an Al/Al-alloy such as for example an AA1xxx series, an AA5xxx series or an AA6xxx series alloy according to the Aluminium Association Standard, or a Cu/Cu-alloy such as for example pure Cu, a CuNi-alloy or a CuNiSi-alloy, or a Fe/Fe-alloy, such for example stainless alloy SS316 or S32750. The thickness of the metal foil (shown as curly bracket t₂ in figure 1 b)) may in an example embodiment be in one of the following ranges; from 10 to 250 µm, preferably from 15 to 200 µm, more preferably from 20 to 150 µm, more preferably from 25 to 100 µm, and most preferably from 30 to 75 µm.

The adherence between the metal foil and the first and second thermoplastic semiconducting polymer is enhanced by applying a first adhesive laid onto and covering from 5 to 95 % of the lower surface area of the metal foil, and a second adhesive layer laid onto and covering from 5 to 95 % of the upper surface area of the metal foil. The adhesive layers are laid in-between the metal foil and the thermoplastic semiconducting polymer layers. Thus, the term "adhesive layer laid onto and covering from 5 to 95 % of the surface area of the metal foil" as used herein refers to an adhesive applied to enhance the adherence between the metal foil and the semiconducting polymer layer. In general, adhesives have relatively poor electrical conductivities such that a layer of adhesive completely covering the interface between the metal foil and the semiconducting polymer may hamper the electric conductivity in the radial direction. Thus, according to the present invention, the adhesive is to be applied with less than complete coverage of the surface of the metal foil to enable direct contact between the metal foil and the semiconducting polymer. In practice at least 5 % of the surface area of the metal foil and correspondingly the semiconducting polymer should be free of adhesive after application of the laminate structure and at least 5 % of the surface should be covered with adhesive after application of the laminate structure to ensure sufficient adhesion between the metal foil and the semiconducting polymer, i.e. the adhesive should cover the surface area of the metal foil in the range of from 5 to 95 %, preferably from 10 to 90 %, more preferably from 15 to 85 %, more preferably from 25 to 75 %, and most preferably from 50 to 75 %. The incomplete covering of the adhesive layer may be obtained by applying the adhesive in a raster pattern or in any other manner known to the skilled person.

The invention may apply any adhesive known to the skilled person being suited for attaching a polymer layer to a metal surface. Examples of suited adhesives includes, but is not limited, to; epoxy resins, phenolic resins, polyurethane based glues, cyanoacrylates, acrylic glues, polyester based glues, copolymer of ethylene and ethyl acrylate, copolymer of ethylene and ethyl acrylic acid, methacrylic acid, copolymer of ethylene and glycidyl methacrylate or epoxy-based monomer such as 1,2-epoxy-1-butene, and copolymer of ethylene and maleic-anhydride. The above mentioned adhesives may be applied with or without electrically conductive particulates providing the glue an enhanced electric conductivity.

The term "thermoplastic polymer" as used herein means that the polymer material becomes pliable or mouldable at certain elevated temperatures and thereafter solidifies upon cooling. The property of being thermoplastic, combined with the incomplete coverage of the adhesive, provides the advantage that an improved electric contact between the metal foil and the semiconducting polymer may be achieved by a heat treatment causing the polymer to melt and then solidify in intimate contact with non-glued parts of the surface of the metal foil. This effectively reduces the electrical resistance across the metal foil/semiconducting polymer interface in these non-glued area(s). The thickness of the thermoplastic semiconducting polymer (before thermosetting) may in an example embodiment be in one of the following ranges; from 25 to 300 µm, preferably from 35 to 200 µm, more preferably from 40 to 150 µm, more preferably from 50 to 100 µm, and most preferably from 50 to 75 µm.

The invention may apply any thermoplastic semiconductive polymer known to the skilled person being suited for use in power cables. Examples of suited polymers includes, but is not limited, to; a polyethylene-based material constituted of either low density polyethylene (LDPE), a linear low density polyethylene (LLDPE), a medium density polyethylene (MDPE), or a high density polyethylene (HDPE), or a copolymer of ethylene with one or more polar monomers of; acrylic acid, methacrylic acid, glycidyl methacrylate, maleic acid, or maleic anhydride. The polymer is made semiconducting by addition and homogenisation of 20 to 40 weight% particulate carbon in the polymer mass. Examples of suited particulate carbon includes but is not limited to; comminuted petrol coke, comminuted anthracite, comminuted char coal, carbon black, carbon nanotubes, etc.

The term "the laminate structure is thermally joined by a heat treatment" as used herein means that after wrapping the laminate structure around the cable core, the laminate structure is heat treated to a temperature at which the thermoplastic semiconducting polymer melts and then cooled to the solid state. If a polyethylene based polymer is applied, the temperature treatment needs typically to increase the temperature of the laminate structure to 120 °C - 130 °C to melt the polymer. In one example embodiment, the heat treatment for thermally joining the laminate structure may be obtained by forming an outer sheathing laid onto the water barrier layer/laminate layer(s) by extrusion of a polymer at an extrusion temperature of around 200 °C. The heat from the molten polymer exiting the extruder fuses the semiconducting polymer layers of the laminate structure below so that the adjacent semiconducting polymer layers of overlapping laminate structure edges are fused together and seals the water barrier. In other example embodiments, the heat treatment for thermally joining the laminate structure may be obtained by application of hot air, radiation (e.g. laser, IR) or induction.

Examples of suited polymers to be applied in the outer sheathing includes, but is not limited, to; polyolefin based materials such as e.g. HDPE, LDPE, LLDPE, MDPE, polyvinyl chloride (PVC), polypropylene (PP), or thermoplastic polyurethane (TPU), etc. The polymer material of the outer sheathing layer may be either electrically insulating (pure polymer) or be made electrically conductive by addition and homogenisation of from 20 to 40 weight% particulate carbon in the polymer mass. Examples of suited particulate carbon includes but is not limited to; comminuted petrol coke, comminuted anthracite, comminuted char coal, carbon black, carbon nanotubes, etc. The deposited outer sheathing may be cooled in a water bath directly after deposition.

An example embodiment of a typical process for forming an example embodiment of a water barrier according to the invention is schematically illustrated in figures 1a) to 1c). Figure 1a) is a drawing schematically illustrating as seen from the side an example embodiment of a cable core of a single conductor cable. The cable core comprises an electric conductor 1 and an insulation 2 in the process of being covered by a laminate structure 3, here in the form of a laminate tape being helically wrapped around the cable core. As seen on the figure the laminate tape has a width, indicated by double arrow marked with "w" on the figure, being approximately twice the width of the non-overlapped part of the previously deposited tape layer. The non-overlapped part of the previously deposited tape layer is indicated on the figure as a double arrow marked "w₁". An advantage of applying the laminate structure in the form of a tape being helically wrapped around the cable core is, apart from the laminate structure being easy and cheap to produce, is that the tape form enables wrapping the laminate around the cable core with a tension to ensure a tight enclosure around the cable core and good contact between deposited laminate layers.

Figure 1b) is a cut view drawing as seen from the side taken along the stapled line marked as A - A' on figure 1a), and which illustrates schematically the stratigraphic structure of the laminate structure before thermosetting/heat treatment. As seen on the figure, the laminate comprises a metal foil 4 of thickness t₂ having a first thermoplastic semiconductive polymer layer 5 on its lower surface. Interposed between the metal foil 4 and the first thermoplastic semiconductive polymer layer 5 there is deposited a first adhesive layer 6. In this example embodiment the adhesive is deposited in a raster pattern with a distance between the raster stripes of adhesive. A second thermoplastic semiconductive polymer layer 7 and an interposed second adhesive layer 8 is arranged on the upper side of the metal foil.

Figure 1c) is a cut view drawing as seen from the side of the same laminate tape as shown in figure 1b) but after the laminate structure is thermally joined by a heat treatment. As seen on the figure, the heat treatment has melted the semiconductive polymer and made it to be in intimate contact with non-glued parts of the surface of the metal foil 4. These parts of the interface between the polymer layers and the metal foil, marked with black double arrows on the figure, have a relatively low electric resistance across the interface.

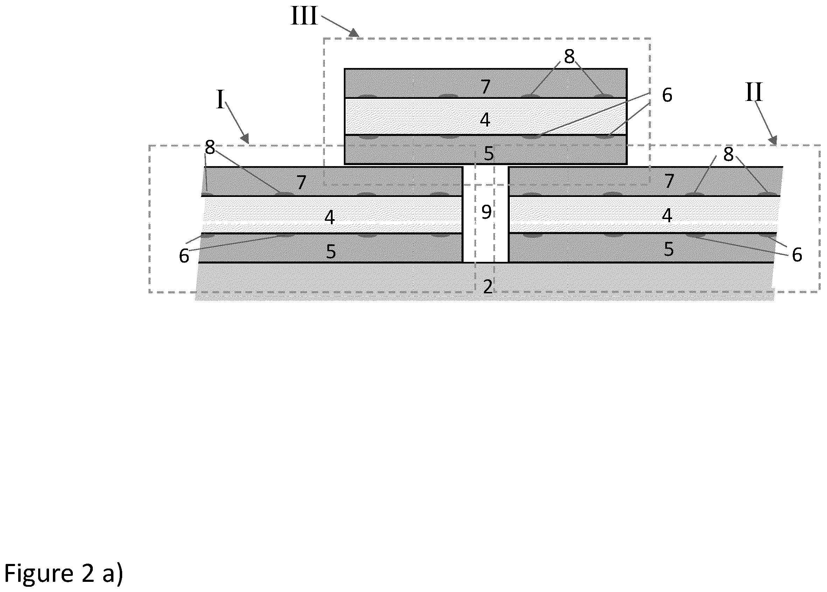

The combined effect of the feature of wrapping the laminate structure with some overlap between opposite edges and the heat treatment is to seal the water barrier against potential longitudinal intrusion/migration of water by fusing together the semiconductive polymer layers of the opposite edges overlapping each other. The seal resulting from the fusion of overlapping polymer layers is illustrated schematically in figures 2a) and 2b). The figures are cut view drawings as seen from the side of a section of an example embodiment of the water barrier according to the invention comprising three windings of the laminate tape shown in figure 1c) wrapped around a cable core. Each winding is identified on the figure by stapled boxes marked with Roman numerals I to III, respectively. Two of the windings, I and II, are laid side by side apart from each other onto the cable core forming a space 9 between them. The third winding, III, is laid onto the first I and second II winding covering the space 9 and extending a distance over the underlying first I and second II winding. Figure 2a) illustrates the windings before the thermosetting heat treatment. As seen on the figure, the second semiconducting polymer layer 7 of the first I winding is made in mechanical contact with the first semiconducting polymer layer 5 of the third III winding, and similarly the second semiconducting polymer layer 7 of the second II winding is made in mechanical contact with the first semiconducting polymer layer 5 of the third III winding.

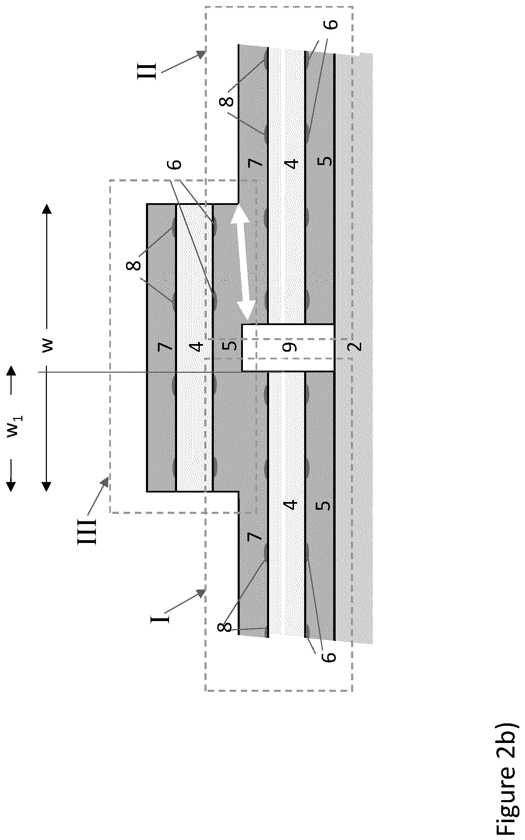

The interface formed between the overlapping parts being in mechanically contact of the semiconducting polymer layers of the different windings of the laminate structure/tape may constitute a migration route relatively easily penetrated by moisture/water diffusing along the interface to enter space 9 and then into the cable core. However, the thermosetting heat treatment causes the semiconducting polymer layers to melt and become fused together at the overlapping parts, as shown schematically in figure 2b). The figure illustrates that the second semiconducting polymer layer 7 of the first I winding is fused and made integral with the first semiconducting polymer layer 5 of the third III winding, and similarly the second semiconducting polymer layer 7 of the second II winding is fused and made integral with first semiconducting polymer layer 5 of the third III winding. This forces water/moisture to diffuse through a continuous solid polymer phase to enter space 9. The wider overlap between opposite edges of the wrapped laminate structure/tape, the longer becomes the diffusion length, w₁, to arrive at space 9. The diffusion length, w₁, marked by the white double arrow on figure 2b) and compared to the width, w, of the laminate structure/tape wound around the cable core.

In general, the longer diffusion path, length w₁, the more watertight the water barrier becomes. In one example embodiment, the overlap between successive layers of the laminate structure may advantageously provide a shortest diffusion path, w₁, of at least 10 mm, more preferably at least 15 mm, more preferably at least 20 mm, more preferably at least 25 mm, more preferably at least 30 mm, more preferably at least 35 mm, and most preferably at least 40 mm.

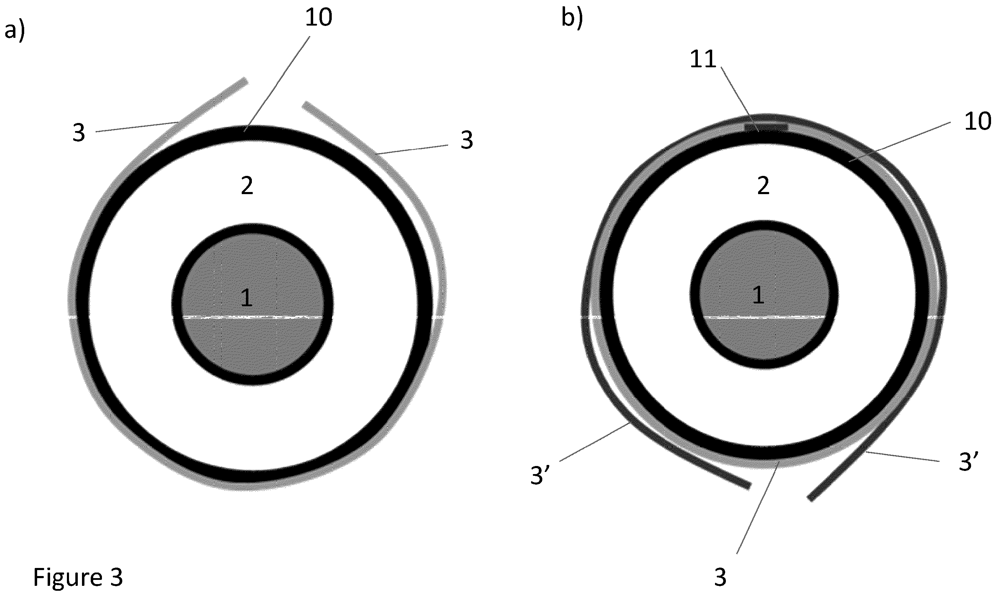

In one example embodiment, the laminate structure may be longitudinally wrapped around the cable core with an overlap of its opposite edges to form a longitudinal seam. In this case, there may advantageously be applied two layers of the laminate structure, one wrapped around the cable core from the bottom and sealed at the top of the cable core, and the other is wrapped from the top and sealed at the bottom. This will make the entire second semiconductive polymer layer of the first "bottom-up" laminate structure to be fused and integrated with the entire first semiconductive polymer layer of the second "top-down" laminate structure causing a diffusion length for penetrating water of at least half the circumference of the cable core. An example of such embodiment is illustrated schematically in figures 3a) and 3b). The figures are cross-sectional cut view drawings. As seen on figure 3a), the cable core 2 is being encapsulated by a laminate structure 3 according to the invention which is longitudinally wrapped around the cable core form the bottom to form the overlap 11 at the top (see figure 3b)). On figure 3b), a second laminate structure 3' is being wrapped longitudinally from the top to the bottom.

This configuration forms an excellent water barrier when being thermally joined because water barrier comprises a first polymer layer of the first laminate structure, a first metal foil of the first laminate structure, a second polymer layer of the first laminate structure being fused and integrated with the first polymer layer of the second laminate structure, a second metal foil of the second laminate structure, and finally a second polymer layer of the second laminate structure. Thus, since the metal foils are impenetrable for moisture/water, any moisture/water entering the cable core must migrate from the seam of the second laminate structure into and migrate through the fused polymer layers between the second and the first metal foil to the seam of the first laminate structure. This diffusion distance is at least equal to a half circumference of the cable core

In a second aspect, the invention relates to a power cable according to claim 1, and which further comprises:
- at least one cable core, where each cable core comprises:
   - an electric conductor, and
   - an electric insulation system electrically insulating the electric conductor, and
   - a water barrier arranged around the electric insulation system,
   characterised in that
- the water barrier is a water barrier according to the invention,
   and in that
- the power cable further comprises a mechanical protection system laid around the at least one cable cores as a group.

The term "current conductor" as used herein encompasses any electric current carrying part of power cables known to the skilled person. The electric conductor is typically made of a metal, often an Al/Al-alloy or a Cu/Cu-alloy but may be of any material known suitable as current conductors. The current conductor may be a single strand of the electrically conductive material or a plurality of strands arranged in a bundle. In the case of applying a current conductor comprising a bundle of strands, the space in-between the strands of the bundle may be occupied by an insulating or a semiconducting filler compound.

The term "electric insulation system" as used herein refers to the electric insulation around the current conductor. The invention is not tied to any specific electric insulation system but may apply any electric insulation system known to the skilled person being suited for electrically insulating current conductors. In one example embodiment, the electric insulation system comprises an isolator layer such as e.g. a polyethylene layer and an electric shielding such as e.g. a semiconducting layer arranged around the current conductor. If the power cable comprises two or more current conductors, each of them will have its own electric insulation system.

The term "cable core" as used herein refers to a single current conductor comprising its electric insulation system and the water barrier according to the invention. In case the power cable comprises two or more current conductors and thus two or more cable cores, the laminate structure according to the invention is to be laid separately around each of the cable cores. In one example embodiment, each of the cable cores applied in the power cable may further comprise an outer polymer sheathing laid onto its water barrier. The outer polymer sheathing may e.g. be made of a polyethylene, such as a low density polyethylene (LDPE), a linear low density polyethylene (LLDPE), a medium density polyethylene (MDPE), or a high density polyethylene (HDPE). The outer sheathing may be insulating or made conductive by containing/having incorporated from 20 to 40 weight% carbon black in the polyethylene phase.

The term "power cable" as used herein encompasses any known power cable having one or a plurality of the above defined cable cores. In one example embodiment, the power cable is an intermediate to high current carrying power cable intended for outdoor and/or subsea use. The power cable may in an example embodiment further comprise optical fibres, umbilical tubes, distancing profiles arranging the cable cores conductors in a cross-section, and any other component known to be present in a power cable.

The term "mechanical protection system" as used herein refers to outer layers of the power cable intended to mechanically protect the cable core(s) and other eventually present components of the power cable from potentially detrimental mechanical strains imposed on the cable under handling, use and storage. The mechanical protection system may comprise any layer/part known to the skilled person suited for mechanically reinforcing and/or protecting the power cable. In one example embodiment, the mechanical protection system comprises an armouring made of e.g. steel cords. The term "laid around the at least one cable cores as a group" as used herein means thus that the mechanical protection system is, contrary to the water barrier not to be separately laid around each cable core, but is to be laid as a layer surrounding the group of one or more cable cores applied in the power cable.

In a further example embodiment, the mechanical protection system may comprise an oversheath, an outermost polymer layer defining the interface towards the surrounding environment of the power cable. The invention may apply any oversheath known to the skilled person suited for being used as the outer mantle of power cables, such as e.g. a polyethylene polymer such as e.g. chlorosulphanated polyethylene (CSP), polypropylene yarn with bitumen, HDPE, LLDPE etc.

The cable core with its water barrier and the mechanical protection system are the typical minimum of components required to make a functional power cable with comparable high electric power transferring capacity.

### List of figures

Figure 1a) is a drawing schematically illustrating as seen from the side of a cable core being covered with an example embodiment of a laminate structure according to the invention.
Figure 1b) is a cut view drawing as seen from the side taken along the stapled line marked as A - A' on figure 1a), and which schematically illustrates the stratigraphic structure of the example embodiment of the laminate structure shown in figure 1a) before a thermosetting heat treatment.
Figure 1c) is a cut view drawing as seen from the side schematically illustrating the stratigraphic structure of the example embodiment of the laminate structure shown in figure 1b) after a thermosetting heat treatment.
Figures 2a) and 2b) are cut view drawings as seen from the side of a section of an example embodiment of the water barrier according to the invention comprising three windings of the laminate tape shown in figure 1c) wrapped around a cable core. Figure 2a) illustrates the section before a thermosetting heat treatment, figure 2b) illustrates the section after a thermosetting heat treatment.
Figures 3a) and 3b) are cross-sectional cut view drawings of a double-layer example embodiment of a longitudinally wrapped laminate structure according to the invention. Figure 3a) illustrates the process of wrapping the first layer of the double-layer laminate structure, while figure 3b) illustrates the process of wrapping the second layer of the double-layer laminate structure.
Figure 4 is cut view drawings as seen from the side of an example embodiment of the water barrier according to the invention applied to simulate the water blocking capacity.

### Verification of the invention

The water blocking effect of the water barrier according to the invention is verified by simulation of water intrusion through the water barrier. The simulation applied an embodiment of laminate structure comprising an adhesive layer between the metal foil and the first and second thermoplastic semiconducting polymer layers. The simulation is based on determination of the diffusion of water through the semiconducting polymer layer and the adhesive layer of the laminate structure. The metal foil was assumed impenetrable for water.

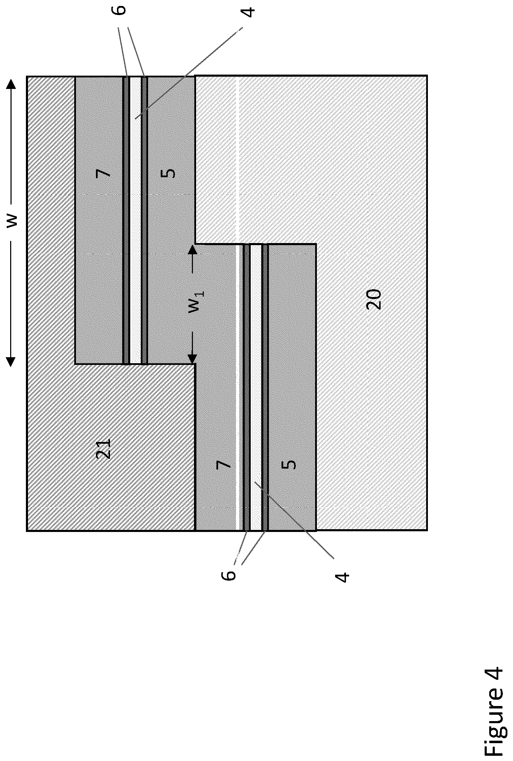

The calculations were made on an example embodiment shown in figure 4. The water barrier was assumed to consist of two partly overlapping layers of the laminate structure according to the invention laid onto an insulation layer 20 of cross-linked polyethylene (XLPE). The laminate structure consisted of a first 5 and a second 7 layer assumed to be cross-linked polyethylene (XLPE). Both layers are 50 µm thick. The first and second adhesive layers (6) were assumed to be continuous layers of cross-linked polyethylene (XLPE) of 2.5 µm thickness. The metal foil 4 was assumed to be 18 µm thick. The lower edge of domain 20 below the water barrier was assumed to always be completely dry, i.e. a relative humidity of 0 %. In the simulation, domain 20 was assumed to be XLPE. Above the water barrier, there was assumed an outer sheathing 21 of high density polyethylene where the top edge is always saturated with water, i.e. constantly having a relative humidity of 100 %. Furthermore, the diffusion over the boundaries on the left and right sides of Figure 4 is always set to zero.

The simulations are based on Fick's law of diffusion and Henry's law to determine the saturation and diffusion of moisture through the outer sheathing 21, adhesive layers 6 and the semiconducting polymer layer 5, 7, and the inner domain 20. The simulation method and the diffusion and solubility parameters applied in the calculations are taken from reference [1].

The diffusion coefficient D was calculated using the Arrhenius parameters D₀ and E_{D}. D₀ and E_{D} was 3.30·10⁻¹ m²/s respectively 55.7 kJ/mol for the adhesive layers 6 and the polymeric parts of the laminate structure 5,7 as well as the inner domain 20. The corresponding parameters for the outer sheathing 21 were 1.40·10² m²/s and 81.37 kJ/mol.

The solubility coefficient S was calculated using the Arrhenius parameters S₀ and E_{S}. S₀ and E_{S} was 1.80·10⁻⁷ kg/(m³Pa) respectively 9.90 kJ/mol for the adhesive layers 6 and the polymeric parts of the laminate structure 5,7 as well as the inner domain 20. The corresponding parameters for the outer sheathing 21 were 7.21·10⁻¹¹ kg/(m³Pa) and -35.92 kJ/mol.

The temperature was assumed to be 40 °C.

With these assumptions and parameters, the calculations gave that the time needed for 1 gram of moisture entering into the low-density polyethylene insulation layer 20 of the cable core was 320 years with an overlap (length w₁) of 10 mm, 768 years with an overlap of 25 mm, and 1216 years with an overlap of 40 mm.

### Reference

1. S.M. Hellesø, S. Hvidsten, G. Balog, and K. M. Furuheim (2011), "Calculation of water ingress in a HV subsea XLPE cable with a layered water barrier sheath system", Journal of Applied Polymer Science 121(4):2127 - 2133 DOI: 10.1002/app.33568

## Claims

1. A power cable comprising at least one cable core and a water barrier encapsulating said cable core,
wherein
the water barrier comprises at least one layer of a laminate structure (3) being wrapped around the cable core (2) with at least some overlap between opposite edges of the laminate structure,
**characterised in that**
the laminate structure comprises:
- a metal foil (4) having a lower and an upper surface area, and
- a first layer of a thermoplastic semiconducting polymer (5) laid onto the lower surface area of the metal foil, and a second layer of a thermoplastic semiconducting polymer (7) laid onto the upper surface area of the metal foil,
and
- the laminate structure (3) is thermally joined by a heat treatment
wherein the water barrier further comprises a first adhesive (6) laid onto the lower surface area of the metal foil and a second adhesive layer (8) laid onto the upper surface area of the metal foil, and wherein the first (6) and the second (8) adhesive layers, after wrapping of the laminate structure, cover from 5 to 95 % of the surface area of the metal foil.

2. The power cable according to claim 1, wherein the metal foil (4) is either:
aluminium,
an aluminium alloy of the AA1xxx series, AA5xxx series or the AA6xxx series according to the Aluminium Association Standard,
copper,
a copper-alloy,
a CuNi-alloy,
a CuNiSi-alloy,
iron,
a Fe-alloy,
stainless steel alloy SS316,
or
stainless steel alloy S32750.

3. The power cable according to claim 1 or 2, wherein the thickness of the metal foil (4) is in one of the following ranges; from 10 to 250 µm, preferably from 15 to 200 µm, more preferably from 20 to 150 µm, more preferably from 25 to 100 µm, and most preferably from 30 to 75 µm.

4. The power cable according to any preceding claim, wherein the first (6) and the second (8) adhesive layers, after wrapping of the laminate structure, cover from 10 to 90 %, more preferably from 15 to 85 %, more preferably from 25 to 75 %, and most preferably from 50 to 75 % of the surface area of the metal foil.

5. The power cable according to any preceding claim, wherein the adhesive (6, 8) of the first and or second adhesive layer is chosen from one of: epoxy resins, phenolic resins, polyurethane based glues, cyanoacrylates, acrylic glues, polyester based glues, copolymer of ethylene and ethyl acrylate, copolymer of ethylene and ethyl acrylic acid, methacrylic acid, copolymer of ethylene and glycidyl methacrylate or epoxy-based monomer such as 1,2-epoxy-1-butene, and copolymer of ethylene and maleic-anhydride.

6. The power cable according to any preceding claim, wherein the adhesive of the first and or second adhesive layer (6, 8) contains electrically conductive particles.

7. The power cable according to any preceding claim, wherein the first (5) and the second (7) layer of a thermoplastic semiconducting polymer is chosen from one of: a low density polyethylene (LDPE), a linear low density polyethylene (LLDPE), a medium density polyethylene (MDPE), or a high density polyethylene (HDPE), or a copolymer of ethylene with one or more polar monomers of; acrylic acid, methacrylic acid, glycidyl methacrylate, maleic acid, or maleic anhydride, and wherein the first (5) and the second (7) layer of a thermoplastic semiconducting polymer contains from 20 to 40 weight% particulate carbon in the polymer mass.

8. The power cable according to claim 7, wherein the particulate carbon is one of: comminuted petrol coke, comminuted anthracite, comminuted char coal, carbon black, or carbon nanotubes.

9. The power cable according to any preceding claim, wherein the overlap between successive layers of the laminate structure provides a shortest diffusion path (w₁), of at least 10 mm, more preferably at least 15 mm, more preferably at least 20 mm, more preferably at least 25 mm, more preferably at least 30 mm, more preferably at least 35 mm, and most preferably at least 40 mm.

10. The power cable according to any preceding claim, wherein:
- each cable core comprises:
- an electric conductor, and
- an electric insulation system electrically insulating the electric conductor, and
- the water barrier arranged around the electric insulation system,
**characterised in that**
- the power cable further comprises a mechanical protection system laid around the at least one cable cores as a group.

11. The power cable according to claim 10, wherein the cable core further comprises an outer sheathing laid onto the water barrier layer by extrusion of a polymer at an extrusion temperature of around 200 °C.

12. The power cable according to claim 11, wherein the outer sheathing is one of; a polyolefin based material, HDPE, LDPE, LLDPE, MDPE, polyvinyl chloride (PVC), polypropylene (PP), or thermoplastic polyurethane (TPU).

13. The power cable according to claim 12, wherein the polymer material of the outer sheathing contains from 20 to 40 weight% particulate carbon in the polymer mass, and where the particulate carbon is one of; comminuted petrol coke, comminuted anthracite, comminuted char coal, carbon black, or carbon nanotubes.

## Patentansprüche

1. Ein Stromkabel umfassend mindestens einen Kabelkern und eine Wassersperre, die den Kabelkern (2) einkapselt, wobei
die Wassersperre mindestens eine Schicht einer Laminatstruktur (3) umfasst, die um den Kabelkern mit zumindest teilweise sich überlappenden gegenüberliegende Kanten der Laminatstruktur gewickelt ist, **dadurch gekennzeichnet, dass**
die Laminatstruktur umfasst:
- eine Metallfolie (4) mit einer Unterseite und einer Oberseite, und
- eine erste Schicht eines thermoplastischen halbleitenden Polymers (5), die auf der Unterseite der Metallfolie aufgebracht ist, und eine zweite Schicht eines thermoplastischen halbleitenden Polymers (7), die auf der Oberseite der Metallfolie aufgebracht ist,
und
- die Laminatstruktur (3) durch eine Wärmebehandlung thermisch verbunden ist,
wobei die Wassersperre ferner eine erste Klebstoffschicht (6), die auf der Unterseite der Metallfolie aufgebracht ist, und eine zweite Klebstoffschicht (8) umfasst, die auf der Oberseite der Metallfolie aufgebracht ist, wobei die erste (6) und die zweite (8) Klebstoffschichten nach dem Umwickeln der Laminatstruktur von 5 bis 95% der Oberfläche der Metallfolie bedecken.

2. Das Stromkabel nach Anspruch 1, wobei die Metallfolie (4) entweder ist:
Aluminium,
eine Aluminiumlegierung der Serien AA1xxx, AA5xxx oder AA6xxx gemäß dem Aluminium Association Standard,
Kupfer,
eine Kupferlegierung,
eine CuNi-Legierung,
eine CuNiSi-Legierung,
Eisen,
eine Fe-Legierung,
Edelstahllegierung SS316 oder
Edelstahllegierung S32750.

3. Das Stromkabel nach Anspruch 1 oder 2, wobei die Dicke der Metallfolie (4) in einem der folgenden Bereiche liegt; von 10 bis 250 µm, vorzugsweise von 15 bis 200 µm, noch bevorzugter von 20 bis 150 µm, noch bevorzugter von 25 bis 100 µm und am meisten bevorzugt von 30 bis 75 µm.

4. Das Stromkabel nach einem vorhergehenden Anspruch, wobei die erste (6) und die zweite (8) Klebstoffschichten nach dem Umwickeln der Laminatstruktur von 10 bis 90%, vorzugsweise 15 bis 85 %, bevorzugter 25 bis 75 % und am meisten bevorzugt 50 bis 75 % der Oberfläche der Metallfolie bedecken.

5. Das Stromkabel nach einem vorhergehenden Anspruch, wobei der Klebstoff der ersten (6) und/oder zweiten (8) Klebstoffschicht ausgewählt ist aus einem der Folgenden:
Epoxidharze, Phenolharze, Klebstoffe auf Polyurethanbasis, Cyanacrylate, Acrylklebstoffe, Klebstoffe auf Polyesterbasis, Copolymer aus Ethylen und Ethylacrylat, Copolymer aus Ethylen und Ethylacrylsäure, Methacrylsäure, Copolymer aus Ethylen und Glycidylmethacrylat oder einem Monomer auf Epoxidbasis, wie beispielsweise 1,2-Epoxy-1-buten, und Copolymer aus Ethylen und Maleinsäureanhydrid.

6. Das Stromkabel nach einem vorhergehenden Anspruch, wobei der Klebstoff der ersten und/oder zweiten Klebstoffschicht (6, 8) elektrisch leitfähige Partikel enthält.

7. Das Stromkabel nach einem vorhergehenden Anspruch, wobei die erste (5) und die zweite (7) Schicht eines thermoplastischen halbleitenden Polymers ausgewählt ist aus einem der Folgenden: Polyethylen niedriger Dichte (LDPE), lineares Polyethylen niedriger Dichte (LLDPE), Polyethylen mittlerer Dichte (MDPE) oder Polyethylen hoher Dichte (HDPE) oder ein Copolymer aus Ethylen mit einem oder mehreren polaren Monomeren von: Acrylsäure, Methacrylsäure, Glycidylmethacrylat, Maleinsäure oder Maleinsäureanhydrid, und wobei die erste (5) und die zweite (7) Schicht eines thermoplastischen halbleitenden Polymers 20 bis 40 Gew.-% partikulären Kohlenstoff in der Polymermasse enthält.

8. Das Stromkabel nach Anspruch 7, wobei es sich bei dem partikulären Kohlenstoff um eines der Folgenden handelt: zerkleinertes Petrolkoks, zerkleinerter Anthrazitkohle, zerkleinerte Holzkohle, Ruß oder Kohlenstoffnanoröhren.

9. Das Stromkabel nach einem vorhergehenden Anspruch, wobei die Überlappung zwischen aufeinanderfolgenden Schichten der Laminatstruktur einen kürzesten Diffusionsweg (w1) von mindestens 10 mm, vorzugsweise mindestens 15 mm, besonders bevorzugt mindestens 20 mm, besonders bevorzugt mindestens 25 mm, besonders bevorzugt mindestens 30 mm, besonders bevorzugt mindestens 35 mm und am meisten bevorzugt mindestens 40 mm bietet.

10. Das Stromkabel nach einem vorhergehenden Anspruch, wobei
- jeder Kabelkern umfasst:
- einen elektrischen Leiter,
- ein elektrisches Isolationssystem, das den elektrischen Leiter elektrisch isoliert, und
- eine um das elektrische Isolationssystem angeordnete Wassersperre,
**dadurch gekennzeichnet, dass**
- das Stromkabel ferner ein mechanisches Schutzsystem umfasst, das um den mindestens einen Kabelkern als Gruppe angeordnet ist.

11. Das Stromkabel nach Anspruch 10, wobei der Kabelkern ferner einen äußeren Mantel aufweist, der durch Extrusion eines Polymers bei einer Extrusionstemperatur von etwa 200 °C auf die Wassersperrschicht aufgebracht ist.

12. Das Stromkabel nach Anspruch 11, wobei die äußere Ummantelung aus einem der Folgenden besteht: einem Polyolefin-basierten Material, HDPE, LDPE, LLDPE, MDPE, Polyvinylchlorid (PVC), Polypropylen (PP) oder thermoplastischem Polyurethan (TPU).

13. Das Stromkabel nach Anspruch 12, wobei das Polymermaterial der äußeren Ummantelung 20 bis 40 Gew.-% partikulären Kohlenstoff in der Polymermasse enthält und wobei es sich bei dem partikulären Kohlenstoff um eines der Folgenden handelt:
zerkleinertes Petrolkoks, zerkleinerte Anthrazitkohle, zerkleinerte Holzkohle, Ruß oder Kohlenstoffnanoröhren.

## Revendications

1. Un câble d'alimentation comprenant au moins un âme de câble et une barrière contre l'eau encapsulant ladite âme de câble,
dans lequel
la barrière contre l'eau comprend au moins une couche d'une structure laminée (3) étant enroulée autour de l'âme de câble (2) avec au moins un certain chevauchement entre les bords opposés de la structure laminée,
**caractérisé en ce que**
la structure laminée comprend:
- une feuille métallique (4) ayant une surface inférieure et une surface supérieure, et
- une première couche (5) d'un polymère thermoplastique semi-conducteur déposée sur la surface inférieure de la feuille métallique, et une seconde couche (7) d'un polymère thermoplastique semi-conducteur déposée sur la surface supérieure de la feuille métallique,
et
- la structure laminée (3) est thermiquement assemblée par un traitement thermique,
dans lequel la barrière contre l'eau comprend en outre un premier adhésif (6) déposé sur la surface inférieure de la feuille métallique et une seconde couche d'adhésif (8) déposée sur la surface supérieure de la feuille métallique, et dans lequel les première (6) et seconde (8) couches d'adhésif, après enroulement de la structure laminée, couvrent de 5 à 95% de la surface de la feuille métallique.

2. Le câble d'alimentation selon la revendication 1, dans lequel la feuille métallique (4) est soit:
aluminium,
un alliage d'aluminium de la série AA1xxx, de la série AA5xxx ou de la série AA6xxx selon la norme de l'Aluminium Association,
cuivre,
un alliage de cuivre,
un alliage CuNi,
un alliage CuNiSi,
fer,
un alliage de Fe,
un alliage d'acier inoxydable SS316,
ou
un alliage d'acier inoxydable S32750.

3. Le câble d'alimentation selon la revendication 1 ou 2, dans lequel l'épaisseur de la feuille métallique (4) est dans l'une des plages suivantes: de 10 à 250 µm, de préférence de 15 à 200 µm, plus préférablement de 20 à 150 µm, plus préférablement de 25 à 100 µm, et le plus préférablement de 30 à 75 µm.

4. Le câble d'alimentation selon l'une quelconque des revendications précédentes, dans lequel les première (6) et seconde (8) couches d'adhésif, après enroulement de la structure laminée, couvrent de 10 à 90%, plus préférablement de 15 à 85%, plus préférablement de 25 à 75%, et le plus préférablement de 50 à 75% de la surface de la feuille métallique.

5. Le câble d'alimentation selon l'une quelconque des revendications précédentes, dans lequel l'adhésif (6, 8) de la première et/ou de la seconde couche d'adhésif est choisi parmi l'un des suivants: résines époxy, résines phénoliques, colles à base de polyuréthane, cyanoacrylates, colles acryliques, colles à base de polyester, copolymère d'éthylène et d'acrylate d'éthyle, copolymère d'éthylène et d'acide acrylique d'éthyle, acide méthacrylique, copolymère d'éthylène et de méthacrylate de glycidyle ou monomère à base d'époxy tel que le 1,2-époxy-1-butène, et copolymère d'éthylène et d'anhydride maléique.

6. Le câble d'alimentation selon l'une quelconque des revendications précédentes, dans lequel l'adhésif de la première et/ou de la seconde couche d'adhésif (6, 8) contient des particules électriquement conductrices.

7. Le câble d'alimentation selon l'une quelconque des revendications précédentes, dans lequel la première (5) et la seconde (7) couche d'un polymère thermoplastique semi-conducteur est choisie parmi l'un des suivants: un polyéthylène basse densité (LDPE), un polyéthylène linéaire basse densité (LLDPE), un polyéthylène moyenne densité (MDPE), ou un polyéthylène haute densité (HDPE), ou un copolymère d'éthylène avec un ou plusieurs monomères polaires parmi: acide acrylique, acide méthacrylique, méthacrylate de glycidyle, acide maléique, ou anhydride maléique, et dans lequel la première (5) et la seconde (7) couche d'un polymère thermoplastique semi-conducteur contient de 20 à 40% en poids de carbone particulaire dans la masse polymère.

8. Le câble d'alimentation selon la revendication 7, dans lequel le carbone particulaire est l'un des suivants: coke de pétrole broyé, anthracite broyé, charbon de bois broyé, noir de carbone, ou nanotubes de carbone.

9. Le câble d'alimentation selon l'une quelconque des revendications précédentes, dans lequel le chevauchement entre les couches successives de la structure laminée fournit un chemin de diffusion le plus court (w₁) d'au moins 10 mm, plus préférablement d'au moins 15 mm, plus préférablement d'au moins 20 mm, plus préférablement d'au moins 25 mm, plus préférablement d'au moins 30 mm, plus préférablement d'au moins 35 mm, et le plus préférablement d'au moins 40 mm.

10. Le câble d'alimentation selon l'une quelconque des revendications précédentes, dans lequel:
- chaque âme de câble comprend:
- un conducteur électrique, et
- un système d'isolation électrique isolant électriquement le conducteur électrique, et
- la barrière contre l'eau disposée autour du système d'isolation électrique,
**caractérisé en ce que**
- le câble d'alimentation comprend en outre un système de protection mécanique disposé autour de l'au moins une âme de câble en tant que groupe.

11. Le câble d'alimentation selon la revendication 10, dans lequel l'âme de câble comprend en outre une gaine extérieure déposée sur la couche de barrière contre l'eau par extrusion d'un polymère à une température d'extrusion d'environ 200°C.

12. Le câble d'alimentation selon la revendication 11, dans lequel la gaine extérieure est l'un des suivants: un matériau à base de polyoléfine, HDPE, LDPE, LLDPE, MDPE, chlorure de polyvinyle (PVC), polypropylène (PP), ou polyuréthane thermoplastique (TPU).

13. Le câble d'alimentation selon la revendication 12, dans lequel le matériau polymère de la gaine extérieure contient de 20 à 40% en poids de carbone particulaire dans la masse polymère, et dans lequel le carbone particulaire est l'un des suivants: coke de pétrole broyé, anthracite broyé, charbon de bois broyé, noir de carbone, ou nanotubes de carbone.
